# EUROPEAN PATENT SPECIFICATION

(11) **EP 0 611 644 B1**
(45) Date of publication and mention of the grant of the patent: **24.03.1999**
(21) Application number: 94610003.9
(22) Date of filing: 14.01.1994
(51) Int. Cl.: B29C 70/00, B29C 51/12

(54) **Method for increasing the stiffnes of thermo-formed objects before form ejection**
Verfahren zum Erhöhen der Steifigkeit von warmegeformten Gegenständen vor dem Entformen
Procédé pour l'augmentation de la rigidité d'objets thermoformés avant leur démoulage

(30) Priority: 19.01.1993 DK 5993
(43) Date of publication of application: 24.08.1994
(73) Proprietor: Marcussen, Egon, 6600 Vejen (DK)
(72) Inventor: Marcussen, Egon, 6600 Vejen (DK)
(74) Representative: Gregersen, Niels Henrik Aarhus Patentkontor

(56) References cited:
- DE-A- 1 479 080
- DE-A- 3 447 968
- US-A- 3 091 946
- US-A- 3 702 355
- US-A- 4 102 964

## Description

The invention relates to a method for making a sandwich construction comprising a thermoformed object such as an inner liner or another plastic part of a refrigerator or freezer, an insulating material and a cabinet wall, which before ejection needs to be supported at desired locations.

Normally the stiffness of the thermoformed object during form ejection and the resistance to damages of such thermoformed objects during subsequent transportation and application are only determined by the configuration and thickness of the object itself.

US-A-4102964 discloses the vacuum forming of a thermoformed object followed by the coating by spraying of the object still on the mold by a rigidizeable layer of resinous material and then upon completion of the coating and curing of the coating material by removal of the rigidized object. DE-A-1479080 discloses a similar method with the additional step of using a second thermo-formed object to sandwich the coating between the two thermoformed objects.

The invention has for its purpose to provide a new and improved method for supporting thermoformed objects before form ejection and by which method it by simple provisions becomes possible to obtain at least a temporary reinforcement of weak sections of such thin-walled thermoformed objects before and after the form ejection, as the thermoformed objects are adapted to form parts of a sandwich construction.

The method according to the invention includes the step of either adding the insulating material to, or spraying cellular plastic or some other polymer on to, or placing foam compartments on, or placing tapes on the outer surface of the thermoformed object at said desired locations in order to increase the stiffness of the thermoformed object prior to form ejection. By simple provisions it hereby becomes possible to obtain at least a temporary reinforcement of weak sections of such thin-walled thermoformed objects before and after the form ejection - as by way of example said sandwich construction comprising said thermoformed object as an inner wall part, said insulating material and said outer cabinet wall.

In other words the invention provides for the possibility of supporting especially weak parts of the thermo-shaped object - such as projecting points; and the method according to the invention makes it possible in general to reduce the thickness of the plastic material of the thermoformed object. The constructor of the plastic parts will have more freedom in the shaping as the material may be supported prior to be strained during the form ejection and the subsequent transportation and application.

The insulating material used for the local reinforcement of the thermoformed object is preferably of the very same type of insulating material as used in the finished sandwich construction so that the surplus consumption of insulating material will be negligible.

The invention is explained in more detail in the following with reference to the drawing: in which:-
- Fig. 1: shows a perspective view of an embodiment of a thermoformed object in the form of a prior art of an inner plastic liner to a refrigerator or freezer - as well as a partial sectional view thereof,
- Fig. 2: shows a partial sectional view of a part of a sandwich construction comprising an inner wall form by a thermoformed object and representing prior art,
- Fig. 3: shows a perspective view of the thermoformed object shown in Fig. 1, and where some typical weak positions, eg corners, shelf grooves, edges, etc. have been reinforced by means of insulating material - before form ejection,
- Fig. 4: shows an embodiment of the method according to the invention of spraying insulating material directly on the outside of the thermoformed object - before form ejection,
- Fig. 5: shows a modified embodiment of the method according to the invention, where foam compartment are used in order to limit the spreading of the insulating material,
- Fig. 6: shows a termoformed object where tape is added to stiffen especially exposed or thin positions, and
- Fig. 7: shows a sectional view of the sandwich construction illustrating the practical use of the method according to the invention.

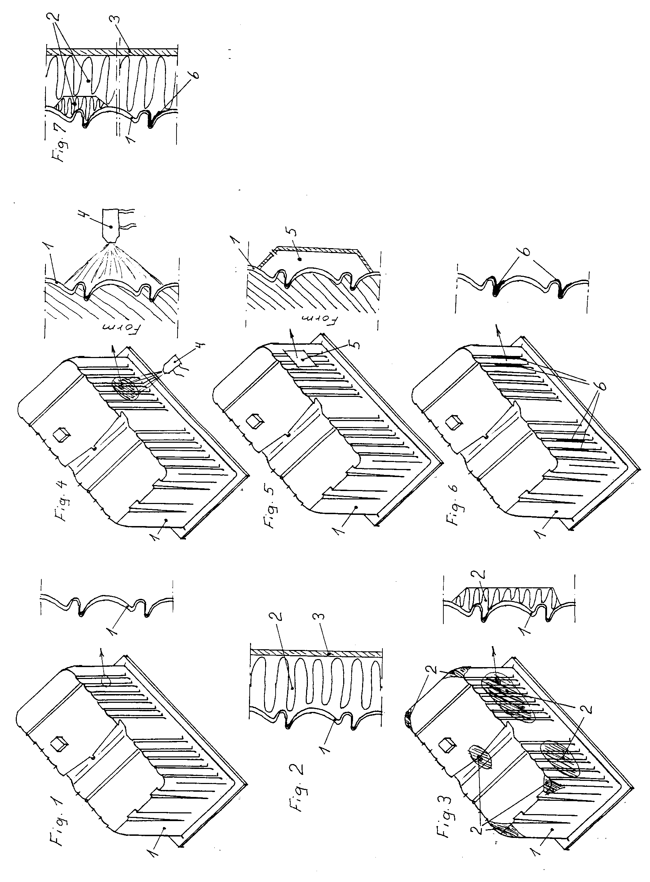

A prior art of a thermoformed object 1 in the form of an inner plastic liner for a refrigerator or freezer as well as a partial sectional view thereof is shown in Fig. 1. A partial view of a sandwich construction comprising the thermoformed object 1 as an inner wall part, the insulating material 2 and an outer cabinet wall 3, is shown in Fig. 2.

Fig. 3 shows a perspective view of the thermoformed object 1, where some typical weak positions, eg corners, shelf grooves, edges, etc. - before form ejection - have been reinforced by means of insulating material 2. And in Fig. 4 an embodiment of the method according to the invention of spraying insulating material 2 directly on the outside of the thermoformed object 1 by means of spraying equipment 4 - before form ejection - is illustrated.

Fig. 5 shows a modified embodiment of the method according to the invention, where foam compartments 5 are used in order to control or limit the spreading of the insulating material 2, by way of example in the form of cellular plastic or polymer - in principle such foam compartments 3 may cover the entire thermoformed object 1.

Fig. 6 shows how a termoformed object 1 in accordance with a modified embodiment of the method according to the invention has been reinforced by means of tape 6 added to especially exposed or thin positions; and finally Fig. 7 shows a sectional view of the sandwich construction illustrating the practical use of the method according to the invention.

Preferably all auxiliary equipments needed for executing the method according to the invention are mounted directly on the thermoforming apparatus - unless the method is adapted to be executed manually. The use of spraying equipment, foam inserting robots, tape and glue dispensers will depend on the construction of the thermofoaming apparatus and the shape of the actual thermoformed object 1.

## Claims

1. A method for making a sandwich construction (1, 2, 3) comprising a thermoformed object (1) such as an inner liner or another plastic part of a refrigerator or freezer, an insulating material (2) and a cabinet wall (3), wherein the thermoformed object before form ejection needs to be supported at desired locations, the method comprising the step of either adding the insulating material (2) to, or spraying celluar plastic or some other polymer on to, or placing foam compartments (5) on, or placing tapes (6) on the outer surface of the thermoformed object (1) at said desired locations in order to increase the stiffness of the thermoformed object (1) prior to form ejection.

## Patentansprüche

1. Verfahren zur Herstellung eines Schichtaufbaus (1, 2, 3), das ein thermogeformtes Objekt (1) wie z.B. eine Inneneinlage oder ein anderes Kunststoffteil eines Kühlschranks oder Gefrierschranks umfaßt sowie ein Isoliermaterial (2) und eine Gehäusewand (3), in der das thermogeformte Objekt vor dem Entformen an gewünschten Stellen gehalten werden muß, wobei das Verfahren wahlweise umfaßt: Aufbringen des Isoliermaterials (2); Aufsprühen von Zellkunststoff oder einem anderen Polymer; Anordnen von Schaumteilen (5); Anordnen von Bändern (6) auf die äußere Oberfläche des thermogeformten Objekts (1) an den gewünschten Stellen, um die Steifigkeit des thermogeformten Objekts (1) vor dem Entformen zu erhöhen.

## Revendications

1. Procédé pour réaliser une construction (1, 2, 3) du type sandwich comportant un objet thermoformé (1) tel qu'un revêtement intérieur ou une autre partie en matière plastique d'un réfrigérateur ou d'un congélateur, une matière isolante (2) et une paroi (3) de coffre, dans lequel l'objet thermoformé, avant l'éjection de la forme, doit être supporté en des emplacements souhaités, le procédé comprenant l'étape soit d'addition de la matière isolante (2) à, soit de pulvérisation d'une matière plastique cellulaire ou d'un certain autre polymère sur, soit la mise en place de compartiments (5) en mousse sur, soit la mise en place de bandes (6) sur la surface extérieure de l'objet thermoformé (1) dans lesdits emplacements souhaités pour augmenter la rigidité de l'objet thermoformé (1) avant l'éjection de la forme.
